# EUROPÄISCHE PATENTSCHRIFT

(11) **EP 2 906 731 B1**
(45) Veröffentlichungstag und Bekanntmachung des Hinweises auf die Patenterteilung: **05.07.2017**
(21) Anmeldenummer: 13799482.8
(22) Anmeldetag: 09.10.2013
(51) Int. Cl.: C22B 7/00, C22B 26/12

(54) **VERFAHREN ZUR HYDROMETALLURGISCHEN RÜCKGEWINNUNG VON LITHIUM AUS DER LITHIUM-EISEN-PHOSPHAT HALTIGEN FRAKTION GEBRAUCHTER GALVANISCHER ZELLEN**
METHOD FOR THE HYDROMETALLURGICAL RECOVERY OF LITHIUM FROM THE FRACTION OF USED GALVANIC CELLS CONTAINING LITHIUM, IRON AND PHOSPHATE
PROCÉDÉ DE RÉCUPÉRATION HYDROMÉTALLURGIQUE DE LITHIUM À PARTIR DE LA FRACTION DE CELLULES GALVANIQUES USAGÉES CONTENANT DU LITHIUM, DU FER ET DU PHOSPHATE

(30) Priorität: 10.10.2012 DE 102012218461; 10.10.2012 DE 102012218462
(43) Veröffentlichungstag der Anmeldung: 19.08.2015
(73) Patentinhaber: Rockwood Lithium GmbH, 60487 Frankfurt (DE)
(72) Erfinder: WOHLGEMUTH, David, 65936 Frankfurt (DE); SCHNEIDER, Mark Andre, 61381 Friedrichsdorf-Burgholzhausen (DE); SPIELAU, Rebecca, 65817 Eppstein (DE); WILLEMS, Johannes, 60489 Frankfurt (DE); STEINBILD, Martin, 60322 Frankfurt (DE)
(74) Vertreter: Rottmayer, Hans
(86) Internationale Anmeldenummer: PCT/EP2013/003027
(87) Internationale Veröffentlichungsnummer: WO 2014/056608

(56) Entgegenhaltungen:
- WO-A1-2012/072619
- JP-A- 2012 234 732

## Beschreibung

Gegenstand der Erfindung ist ein Verfahren zur hydrometallurgischen Rückgewinnung von Lithium aus der Lithium-Eisen-Phosphat haltigen Fraktion gebrauchter galvanischer Zellen.

Mobile elektronische Geräte benötigen zur unabhängigen Stromversorgung immer leistungsfähigere wieder aufladbare Batterien. Für diese Zwecke werden wegen ihrer Energiedichte ausgedrückt in Wh/kg, der Zyklenbeständigkeit und der geringen Selbstentladung Lithiumionen-Batterien eingesetzt. Als hinsichtlich der Sicherheit vorteilhafte Lithiumionen-Batterien haben sich Lithium-Eisenphosphat-Batterien (LiFePO₄), auch als LFP-Batterien bekannt, herausgestellt. Das aktive Kathodenmaterialien in diesen Batterien besteht aus Lithium-Eisenphosphat, aus dem beim Ladevorgang Lithiumionen freigesetzt und in das Anodenmaterial interkaliert werden. Großformatige Lithiumakkumulatoren werden für stationäre Anwendungen (power back-up) oder im Automobilbereich für Traktionszwecke (Hybridantriebe oder reinelektrischen Antrieb) eingesetzt. Im Hinblick auf die Sicherheit bei letztgenannten Anwendungen wird LFP-Batterien eine überragende Bedeutung eingeräumt. Da mit der Größe und der Anzahl der hergestellten, ge- und anschließend verbrauchten Batterien die Menge der darin enthaltenen Wertstoffe wächst, ist ein ökonomisches Verfahren zur Rückgewinnung des in den Batterien enthaltenen Lithiums erforderlich.

Aus dem Dokument WO 2012/072619 A1 ist ein Verfahren zur Rückgewinnung von Lithium aus der LiFePO₄-haltigen Fraktion geschredderter und gesichteter Zellen bekannt, bei dem die LiFePO₄-haltige Fraktion mit Säurelösung in Gegenwart eines Oxidationsmittels behandelt wird. Die herausgelösten Lithiumionen werden vom ungelösten Eisenphosphat abgetrennt und aus der Lithium haltigen Lösung als Salz gefällt. Die hydrometallurgische Aufarbeitung erfolgt mit verdünnter Schwefelsäure unter Einleitung von Sauerstoff, Ozon oder Zusatz von Wasserstoffperoxid im Temperaturbereich von 80°C bis 120°C.

Nachteilig an diesem Verfahren ist die hohe Energieintensivität des Extraktionsprozesses, die hohen Anforderungen hinsichtlich der Korrosionsbeständigkeit der eingesetzten Apparaturen und die Reinheit der durch Ausfällung erhältlichen Lithiumsalze.

Die Erfindung hat sich die Aufgabe gestellt, ein Verfahren anzugeben, das höchstmögliche Energieeffizienz bei der Extraktion des Lithiums bei gleichzeitig niedrigen Anforderungen hinsichtlich der Korrosionsbeständigkeit der eingesetzten Extraktionsapparatur und erhöhte Reinheit der erhaltenen Lithiumverbindungen sicherstellt.

Die gestellte Aufgabe wird gelöst durch ein Verfahren zur hydrometallurgischen Rückgewinnung von Lithium aus der Lithium-Eisen-Phosphat haltigen Fraktion gebrauchter galvanischer Zellen, bei dem eine Lithium-Eisen-Phosphat haltige Fraktion mit einem Aluminiumgehalt bis 5 Gew.-% und einer Partikelgröße bis 150 µm in die bezogen auf den Lithiumgehalt der Lithium-Eisen-Phosphat haltigen Fraktion mindestens stöchiometrischen Menge Schwefelsäure mit einer Konzentration von 0,5 bis 3 mol/l und einem Feststoff zu Flüssigkeits-Verhältnis im Bereich von 100 bis 750 g/l eingebracht und unter Zusatz der bezogen auf den zu oxidierenden Eisengehalt der Lithium-Eisen-Phosphat haltigen Fraktion mindestens stöchiometrischen Menge Wasserstoffperoxid bei Temperaturen von 25 bis 70°C aufgeschlossen, die gebildete Lithiumsulfat-Lösung abgetrennt und der verbleibende Rückstand mindestens zweimal gewaschen, die abgetrennte Lithiumsulfat- und die Lithiumsulfat haltigen Wasch-Lösungen vereinigt sowie mittels Elektrodialyse mit bipolaren Membranen in Lithiumhydroxid umgewandelt wird.

Alternativ wird die Aufgabe gelöst durch ein Verfahren zur hydrometallurgischen Rückgewinnung von Lithium aus der Lithium-Eisen-Phosphat haltigen Fraktion gebrauchter galvanischer Zellen, bei dem eine Lithium-Eisen-Phosphat haltige Fraktion mit einem Aluminiumgehalt bis 5 Gew.-% und einer Partikelgröße bis 500 µm in die bezogen auf den Lithiumgehalt der Lithium-Eisen-Phosphat haltigen Fraktion mindestens stöchiometrischen Menge Salzsäure mit einer Konzentration von 0,5 bis 3 mol/l und einem Feststoff zu Flüssigkeits-Verhältnis im Bereich von 50 bis 450 g/l eingebracht und unter Zusatz der bezogen auf den zu oxidierenden Eisengehalt der Lithium-Eisen-Phosphat haltigen Fraktion mindestens stöchiometrischen Menge Wasserstoffperoxid bei Temperaturen von 30 bis 70°C aufgeschlossen, die gebildete Lithiumchlorid-Lösung abgetrennt und der verbleibende Rückstand mindestens zweimal gewaschen, die abgetrennte Lithiumchlorid- und die Lithiumchlorid haltigen Wasch-Lösungen vereinigt sowie mittels Elektrodialyse mit bipolaren Membranen in Lithiumhydroxid umgewandelt wird.

Überraschender Weise wurde gefunden, dass der Aluminiumgehalt unter dem angegebenen Grenzwert liegen sollte, um das Entstehen einer zündfähigen Knallgasmischung sowie Probleme bei der Abtrennung des gelösten Aluminiums zu vermeiden. Überraschender Weise gelingt die Abtrennung des als Stromableitermaterial eingesetzten Aluminiums mittels physikalischer Trennmethoden, wenn die Lithium-Eisen-Phosphat haltigen Fraktion auf die genannte Partikelgröße zerkleinert wurde. Weiterhin wurde gefunden, dass die Extraktion des Lithiums ohne zusätzliche Wärmequelle, bereits bei Ausnutzung der während der Extraktion freiwerdenden Reaktionswärme stattfindet. Dadurch, dass die Reaktionswärme durch die Dosierung des Oxidationsmittels kontrolliert und sehr gering gehalten wird, kann eine quasi autokatalytische Zersetzung des Oxidationsmittels generell vermieden werden. Zur Extraktion des Lithiums müssen quasi nur stöchiometrische Mengen Oxidationsmittel eingesetzt werden.

Dabei wird unter den angegebenen milden, hydrometallurgischen Aufschlussbedingungen das enthaltene Lithium zu mehr als 99 Gew.-% in Lösung gebracht und zu mehr als 90 Gew.-% im Falle der Benutzung von Schwefelsäure oder im Falle der Benutzung von Salzsäure zu mehr als 95 Gew.-% zurück gewonnen.

Es wird eine Lithium-Eisen-Phosphat haltige Fraktion mit einem Aluminiumgehalt bis 3 Gew.-%, vorzugsweise <1 Gew.-% eingesetzt. Damit wird das Entstehen einer zündfähigen Knallgasmischung sowie Probleme bei der Abtrennung des gelösten Aluminiums weiter vermindert.

Vorzugsweise wird weiterhin der Gehalt an mehrwertigen Metallkationen mittels Ionenaustauscher reduziert. Der verminderte Gehalt an mehrwertigen Metallkationen wirkt sich insbesondere positiv auf eine weitere Prozessierung der Lösung mittels Elektrodialyse mit bipolaren Membranen aus, da hier diese Metallkationen als "Membrangifte" aufgrund ihrer Abscheidung in Form der Hydroxide in und auf den eingesetzten Membranen wirken.

Besonders bevorzugt weist die Lithium-Eisen-Phosphat haltige Fraktion eine Partikelgröße bis 500 µm, vorzugsweise 50 bis 400 µm auf. Der Einsatz der genannten Partikelgröße verbessert das Aufschlussverhalten und begünstigt die Abtrennung des Aluminiums.

Vorteilhafter Weise wird die Schwefelsäure mit einer Konzentration von 0,75 bis 2,5 mol/l, vorzugsweise 1,0 bis 2,0 mol/l eingesetzt. Der Einsatz von Schwefelsäure im genannten Konzentrationsbereich vermindert die Anforderungen an die Korrosionsbeständigkeit der eingesetzten Apparaturen beträchtlich.

Besonders bevorzugt wird das Feststoff zu Flüssigkeits-Verhältnis im Bereich von 150 bis 650 g/l, vorzugsweise 250 bis 550 g/l µm im Falle der Benutzung von Schwefelsäure oder im Falle der Benutzung von Salzsäure wird das Feststoff zu Flüssigkeits-Verhältnis im Bereich von 80 bis 400 g/l, vorzugsweise 150 bis 300 g/l eingestellt. Trotz des hohen Feststoffgehaltes in der Reaktionsmischung wird das enthaltene Lithium nahezu quantitativ in Lösung gebracht.

Vorzugsweise wird der Aufschluss bei Temperaturen von 30 bis 65°C, vorzugsweise von 35 bis 60°C im Falle der Benutzung von Schwefelsäure oder im Falle der Benutzung von Salzsäure wird der Aufschluss bei Temperaturen von 35 bis 65°C, vorzugsweise von 40 bis 60°C durchgeführt. Überraschender Weise wird dadurch die Effektivität des Herauslösens des Lithiums weder hinsichtlich der Zeitdauer noch der Menge wesentlich beeinflusst. Der genannte Temperaturbereich ist mit einfachen anlagentechnischen Mitteln einstellbar.

Vorteilhafter Weise wird der Aufschlussrückstand mindestens dreimal gewaschen. Es wurde gefunden, dass damit mehr als 90 Gew.-% im Falle der Benutzung von Schwefelsäure oder im Falle der Benutzung von Salzsäure damit mehr als 95 Gew.-% des enthaltenen Lithiums erhalten werden kann.

Vorzugsweise werden die Schwefelsäure und/oder das Wasserstoffperoxid im Überschuss eingesetzt. Besonders bevorzugt werden 0,1 bis 10 Mol-% Überschuss, vorzugsweise 1 bis 5 Mol- % im Falle der Benutzung von Schwefelsäure oder im Falle der Benutzung von Salzsäure werden 0,1 bis 10 Mol-% Überschuss, vorzugsweise 0,5 bis 5 Mol- % Überschuss eingesetzt.

Das nach dem Verfahren hergestellte Produkt ist hinsichtlich seiner Reinheit für die Produktion von Lithium-Übergangsmetalloxiden oder Lithium-Übergangsmetallphosphaten geeignet und kann vorzugsweise zur Herstellung von Aktivmaterialien zur Verwendung in Kathoden von Lithium-Ionen-Batterien eingesetzt werden.

Im Folgenden wird der erfindungsgemäße Prozess allgemein beschrieben.

### Beispiele

Die Erfindung wird im Falle der Benutzung von Schwefelsäure anhand der nachfolgenden Beispiele und der Tabelle 1 erläutert.

Unter den in Tabelle 1 angegebenen Bedingungen wurden jeweils 5 Versuche mit zwei unterschiedlichen Lithium-Eisen-Phosphat haltigen Fraktionen durchgeführt.

Die Versuche 1 bis 5 wurde eine Lithium-Eisen-Phosphat haltige Fraktion eingesetzt, die aus nicht in Batterien verbauten Kathoden erhalten wurde. Für die Versuche 6 bis 10 wurde eine Lithium-Eisen-Phosphat haltige Fraktion aus Batterien eingesetzt.
Als Oxidationsmittel wurde Wasserstoffperoxid im Überschuss von 5 mol% eingesetzt.

**Tabelle 1**

| Versuchsnummer | S/L [g/l] | c(H₂SO₄) *Überschuss* | Verfahrensbedingungen | Li [%] | Fe [%] | P [%] |
|---|---|---|---|---|---|---|
| 1 | 488 | 2 M | 6 h, 60 °C | 91.6 | 1.3 | 0.6 |
| | | 5 *mol%* | | | | |
| 2 | 270 | 1 M | 6 h, 60 °C, | 95.8 | 0.3 | 1.1 |
| | | *5 mol%* | | | | |
| 3 | 270 | 1 M | 5 h, 55 °C, | 97.8 | 0.2 | 0.8 |
| | | *5 mol%* | | | | |
| 4 | 488 | 2 M | 5 h, 55 °C | 91.6 | 1.8 | 0.7 |
| | | *5 mol%* | | | | |
| 5 | 270 | 1 M | 5 h, 60 °C | >99 | 6.0 | 7.6 |
| | | *5 mol%* | | | | |
| 6 | 270 | 1 M | 5 h, 60 °C | >99 | 5.5 | 6.7 |
| | | *5 mol%* | | | | |
| 7 | 270 | 1 M | 5 h, 60 °C | >99 | 4.0 | 5.5 |
| | | *5 mol%* | | | | |
| 8 | 270 | 1 M | 7 h, 60 °C | >99 | 4.0 | 6.6 |
| | | *5 mol%* | | | | |
| 9 | 270 | 1 M | 5 h, 60 °C | >99 | 6.4 | 7.5 |
| | | *5 mol%* | | | | |
| 10 | 488 | 2 M | 5 h, 55 °C | >99 | 12.5 | 13.4 |
| | | *5 mol%* | | | | |

Die Erfindung wird im Falle der Benutzung von Salzsäure anhand der nachfolgenden Beispiele und der Tabelle 2 erläutert.

Unter den in Tabelle 2 angegebenen Bedingungen wurden jeweils 8 Versuche mit zwei unterschiedlichen Lithium-Eisen-Phosphat haltigen Fraktionen durchgeführt. Die Versuche 11 bis 14 wurden mit einer Lithium-Eisen-Phosphat haltigen Fraktion durchgeführt, die aus nicht in Batterien verbauten Kathoden erhalten wurde. Für die Versuche 15 bis 18 wurde eine Lithium-Eisen-Phosphat haltige Fraktion aus Batterien eingesetzt.

Als Oxidationsmittel wurde Wasserstoffperoxid mit dem angegebenen Überschuss eingesetzt.

**Tabelle 2**

| Versuchsnummer | S/L [g/l] | c(HCl) *Überschuss* | c(H₂O₂) *Überschuss* | Verfahrensbedingungen | Li [%] | Fe [%] | P [%] |
|---|---|---|---|---|---|---|---|
| 11 | 300 | 2 M | ohne H₂O₂ | 5 h, 40°C, | 36,0 | 26,6 | 26,2 |
| | | 5 mol% | | | | | |
| 12 | 300 | 2 M | ohne H₂O₂ | 5 h, 40°C | 37,5 | 27,9 | 24,4 |
| | | 5 mol% | | | | | |
| 13 | 270 | 2 M | 30 Gew.-% | 24 h, 25°C | 53,4 | 2,1 | 0,1 |
| | | 5 mol% | 20 mol% | | | | |
| 14 | 270 | 2 M | 30 Gew.-% | 1 h, 40°C | 100 | 0,5 | 0,3 |
| | | 5 mol% | 20 mol% | | | | |
| 15 | 270 | 2 M | 30 Gew.-% | 5 h, 40°C | 100 | 0,9 | 0,4 |
| | | 5 mol% | 20 mol% | | | | |
| 16 | 270 | 2 M | 30 Gew.-% | 5 h, 40°C | 88,8 | 31,5 | 29,0 |
| | | 5 mol% | 20 mol% | | | | |
| 17 | 270 | 2 M | 30 Gew.-% | 5 h, 40°C | 100 | 18,4 | 17,4 |
| | | 5 mol% | 20 mol% | | | | |
| 18 | 270 | 2 M | 30 Gew.-% | 5 h, 40°C | 84,0 | 11,8 | 11,0 |
| | | 5 mol% | 20 mol% | | | | |

## Patentansprüche

1. Verfahren zur hydrometallurgischen Rückgewinnung von Lithium aus der Lithium-Eisen-Phosphat haltigen Fraktion gebrauchter galvanischer Zellen, **dadurch gekennzeichnet, dass** eine Lithium-Eisen-Phosphat haltige Fraktion mit einem Aluminiumgehalt bis 5 Gew.-% und einer Partikelgröße bis 150 µm in die bezogen auf den Lithiumgehalt der Lithium-Eisen-Phosphat haltigen Fraktion mindestens stöchiometrischen Menge Schwefelsäure mit einer Konzentration von 0,5 bis 3 mol/l und einem Feststoff zu Flüssigkeits-Verhältnis im Bereich von 100 bis 750 g/l eingebracht und unter Zusatz der bezogen auf den zu oxidierenden Eisengehalt der Lithium-Eisen-Phosphat haltigen Fraktion mindestens stöchiometrischen Menge Wasserstoffperoxid bei Temperaturen von 25 bis 70°C aufgeschlossen, die gebildete Lithiumsulfat-Lösung abgetrennt und der verbleibende Rückstand mindestens zweimal gewaschen, die abgetrennte Lithiumsulfat- und die Lithiumsulfat haltigen Wasch-Lösungen vereinigt sowie mittels Elektrodialyse mit bipolaren Membranen in Lithiumhydroxid umgewandelt wird.

2. Verfahren zur hydrometallurgischen Rückgewinnung von Lithium aus der Lithium-Eisen-Phosphat haltigen Fraktion gebrauchter galvanischer Zellen, **dadurch gekennzeichnet, dass** eine Lithium-Eisen-Phosphat haltige Fraktion mit einem Aluminiumgehalt bis 5 Gew.-% und einer Partikelgröße bis 500 µm in die bezogen auf den Lithiumgehalt der Lithium-Eisen-Phosphat haltigen Fraktion mindestens stöchiometrischen Menge Salzsäure mit einer Konzentration von 0,5 bis 3 mol/l und einem Feststoff zu Flüssigkeits-Verhältnis im Bereich von 50 bis 450 g/l eingebracht und unter Zusatz der bezogen auf den zu oxidierenden Eisengehalt der Lithium-Eisen-Phosphat haltigen Fraktion mindestens stöchiometrischen Menge Wasserstoffperoxid bei Temperaturen von 30 bis 70°C aufgeschlossen, die gebildete Lithiumchlorid-Lösung abgetrennt und der verbleibende Rückstand mindestens zweimal gewaschen, die abgetrennte Lithiumchlorid- und die Lithiumchlorid haltigen Wasch-Lösungen vereinigt sowie mittels Elektrodialyse mit bipolaren Membranen in Lithiumhydroxid umgewandelt wird.

3. Verfahren nach Anspruch 1 oder 2, **dadurch gekennzeichnet, dass** eine Lithium-Eisen-Phosphat haltige Fraktion mit einem Aluminiumgehalt bis 3 Gew.-%, vorzugsweise <1 Gew.-% eingesetzt wird.

4. Verfahren nach Anspruch 1 bis 3, **dadurch gekennzeichnet, dass** der Gehalt an mehrwertigen Metallkationen mittels Ionenaustauscher reduziert wird.

5. Verfahren nach Anspruch 1, **dadurch gekennzeichnet, dass** die Lithium-Eisen-Phosphat haltige Fraktion eine Partikelgröße bis 500 µm, vorzugsweise 50 bis 400 µm aufweist.

6. Verfahren nach Anspruch 2, **dadurch gekennzeichnet, dass** die Lithium-Eisen-Phosphat haltige Fraktion eine Partikelgröße bis 500 µm, vorzugsweise 50 bis 400 µm aufweist.

7. Verfahren nach Anspruch 1, **dadurch gekennzeichnet, dass** die Schwefelsäure mit einer Konzentration von 0,75 bis 2,5 mol/l, vorzugsweise 1,0 bis 2,0 mol/l eingesetzt wird.

8. Verfahren nach Anspruch 2, **dadurch gekennzeichnet, dass** die Salzsäure mit einer Konzentration von 0,75 bis 2,5 mol/l, vorzugsweise 1,0 bis 2,0 mol/l eingesetzt wird.

9. Verfahren nach Anspruch 1, **dadurch gekennzeichnet, dass** das Feststoff zu Flüssigkeits-Verhältnis im Bereich von 150 bis 650 g/l, vorzugsweise 250 bis 550 g/l eingestellt wird.

10. Verfahren nach Anspruch 2, **dadurch gekennzeichnet, dass** das Feststoff zu Flüssigkeits-Verhältnis im Bereich von 80 bis 400 g/l, vorzugsweise 150 bis 300 g/l eingestellt wird.

11. Verfahren nach Anspruch 1, **dadurch gekennzeichnet, dass** derAufschluss bei Temperaturen von 30 bis 65°C, vorzugsweise von 35 bis 60°C durchgeführt wird.

12. Verfahren nach Anspruch 2, **dadurch gekennzeichnet, dass** der Aufschluss bei Temperaturen von 35 bis 65°C, vorzugsweise von 40 bis 60°C durchgeführt wird.

13. Verfahren nach Anspruch 1 bis 12, **dadurch gekennzeichnet, dass** der Aufschlussrückstand mindestens dreimal gewaschen wird.

14. Verfahren nach Anspruch 1, **dadurch gekennzeichnet, dass** Schwefelsäure und/oder das Wasserstoffperoxid im Überschuss eingesetzt werden.

15. Verfahren nach Anspruch 2, **dadurch gekennzeichnet, dass** Salzsäure und/oder das Wasserstoffperoxid im Überschuss eingesetzt werden.

16. Verfahren nach Anspruch 14 oder 15, **dadurch gekennzeichnet, dass** 0,1 bis 10 Mol-% Überschuss eingesetzt werden.

## Claims

1. Method for hydrometallurgical recovery of lithium from the lithium iron phosphate-containing fraction of spent galvanic cells, **characterized in that** a lithium iron phosphate-containing fraction with an aluminum content of up to 5 % by weight und a particle size of up to 150 µm is introduced into at least the stoichiometric quantity of sulfuric acid, based on the lithium content of the lithium iron phosphate-containing fraction, with a concentration of 0.5 to 3 mol/l and a solid to liquid ratio in the range of 100 to 750 g/l and digested at temperatures of 25 to 70°C with addition of at least the stoichiometric quantity of hydrogen peroxide, the lithium sulfate solution formed is separated and the remaining residue is washed at least twice, the separated lithium sulfate solution and the lithium sulfate containing wash solutions are combined. and converted to lithium hydroxide by electrodialysis with bipolar membranes.

2. Method for hydrometallurgical recovery of lithium from the lithium iron phosphate-containing fraction of spent galvanic cells, **characterized in that** a lithium iron phosphate-containing fraction with an aluminum content of up to 5 % by weight and a particle size of up to 500 µm is introduced into the at least stoichiometric quantity of hydrochloric acid, based on the lithium content of the lithium iron phosphate-containing fraction, with a concentration of 0.5 to 3 mol/l and a solid to liquid ratio in the range of 50 to 450 g/l and digested at temperatures of 30 to 70°C addition of at least the stoichiometric quantity of hydrogen peroxide, based on the iron content to be oxidized of the lithium iron phosphate-containing fraction, the lithium chloride solution formed is separated, and the residue remaining is washed at least twice, the lithium chloride solution and the lithium chloride-containing wash solutions are combined and converted to lithium hydroxide by electrodialysis with bipolar membranes.

3. Method according to claim 1 or 2, **characterized in that** a lithium iron phosphate-containing fraction with an aluminum content of up to 3 % by weight, preferably <1 % by weight is used.

4. Method according to claim 1 to 3, **characterized in that** the content of polyvalent metal cations is reduced with an ion exchanger.

5. Method according to claim 1, **characterized in that** the lithium iron phosphate-containing fraction has a particle size of up to 500 µm, preferably 50 to 400 µm.

6. Method according to claim 2, **characterized in that** the lithium iron phosphate-containing fraction has a particle size of up to 500 µm, preferably 50 to 400 µm.

7. Method according to claim 1, **characterized in that** sulfuric acid with a concentration of 0.75 to 2.5 mol/l, preferably 1.0 to 2.0 mol/l is used.

8. Method according to claim 2, **characterized in that** hydrochloric acid with a concentration of 0.75 to 2.5 mol/l, preferably 1.0 to 2.0 mol/l is used.

9. Method according to claim 1, **characterized in that** the solid to liquid ratio is set in the range of 150 to 650 g/l, preferably 250 to 550 g/.

10. Method according to claim 2, **characterized in that** the solid to liquid ratio is set in the range of 80 to 400 g/l, preferably 150 to 300 g/l.

11. Method according to claim 1, **characterized in that** the digestion is performed at temperatures of 30 to 65°C, preferably 35 to 60°C.

12. Method according to claim 2, **characterized in that** the digestion is performed at temperatures of 35 to 65°C, preferably 40 to 60°C.

13. Method according to claim 1 to 12, **characterized in that** the digestion residue is washed at least three times.

14. Method according to claim 1, **characterized in that** sulfuric acid and/or the hydrogen peroxide is used in excess.

15. Method according to claim 2, **characterized in that** hydrochloric acid and/or the hydrogen peroxide is used in excess.

16. Method according to claim 14 or 15, **characterized in that** 0.1 to 10 mol-% excess is used.

## Revendications

1. Procédé de récupération hydrométallurgique de lithium à partir de la fraction contenant du phosphate de lithium-fer de cellules galvaniques usées, **caractérisé en ce qu'**une fraction contenant du phosphate de lithium-fer présentant une teneur en aluminium jusqu'à 5 % en poids et une taille de particule jusqu'à 150 µm est intégrée dans la quantité au moins stoechiométrique d'acide sulfurique par rapport à la teneur en lithium de la fraction contenant du phosphate de lithium-fer, en une concentration de 0,5 à 3 moles/l et un rapport solide-liquide dans la plage de 100 à 750 g/l et en ajoutant la quantité au moins stoechiométrique de peroxyde d'hydrogène par rapport à la teneur en fer à oxyder de la fraction contenant du phosphate de lithium-fer, est décomposée à des températures de 25 à 70 °C, la solution formée de sulfate de lithium est séparée et le résidu restant est lavé au moins deux fois, les solutions séparées de sulfate de lithium et solutions de lavage contenant du sulfate de lithium sont réunies et converties par électrodialyse avec des membranes bipolaires en hydroxyde de lithium.

2. Procédé de récupération hydrométallurgique de lithium à partir de la fraction contenant du phosphate de lithium-fer de cellules galvaniques usées, **caractérisé en ce qu'**une fraction contenant du phosphate de lithium-fer présentant une teneur en aluminium jusqu'à 5 % en poids et une taille de particules jusqu'à 500 µm est intégrée dans la quantité au moins stoechiométrique d'acide chlorhydrique par rapport à la teneur en lithium de la fraction contenant du lithium-fer-phosphate en une concentration de 0,5 à 3 moles/l et un rapport solide-liquide dans la plage de 50 à 450 g/l et en ajoutant la quantité au moins stoechiométrique de peroxyde d'hydrogène par rapport à la teneur en fer à oxyder de la fraction contenant du phosphate de lithium-fer, est décomposée à des températures de 30 à 70 °C, la solution formée de chlorure de lithium est séparée et le résidu restant est lavé au moins deux fois, les solutions séparées de chlorure de lithium et solutions de lavage contenant du chlorure de lithium sont réunies et converties par électrodialyse avec des membranes bipolaires en hydroxyde de lithium.

3. Procédé selon la revendication 1 ou 2, **caractérisé en ce que** l'on utilise une fraction contenant du phosphate de lithium-fer présentant une teneur en aluminium jusqu'à 3 % en poids, de préférence < 1 % en poids.

4. Procédé selon la revendication 1 à 3, **caractérisé en ce que** la teneur en cations métalliques plurivalents est réduite au moyen d'échangeurs d'ions.

5. Procédé selon la revendication 1, **caractérisé en ce que** la fraction contenant du phosphate de lithium-fer présente une taille de particule jusqu'à 500 µm, de préférence de 50 à 400 µm.

6. Procédé selon la revendication 2, **caractérisé en ce que** la fraction contenant du phosphate de lithium-fer présente une taille de particule jusqu'à 500 µm, de préférence de 50 à 400 µm.

7. Procédé selon la revendication 1, **caractérisé en ce que** l'acide sulfurique est utilisé en une concentration de 0,75 à 2,5 moles/l, de préférence de 1,0 à 2,0 moles/l.

8. Procédé selon la revendication 2, **caractérisé en ce que** l'acide chlorhydrique est utilisé en une concentration de 0,75 à 2,5 moles/l, de préférence de 1,0 à 2,0 moles/l.

9. Procédé selon la revendication 1, **caractérisé en ce que** le rapport solide-liquide est ajusté dans la plage de 150 à 650 g/l, de préférence de 250 à 550 g/l.

10. Procédé selon la revendication 2, **caractérisé en ce que** le rapport solide-liquide est ajusté dans la plage de 80 à 400 g/l, de préférence de 150 à 300 g/l.

11. Procédé selon la revendication 1, **caractérisé en ce que** la décomposition est réalisée à des températures de 30 à 65 °C, de préférence de 35 à 60 °C.

12. Procédé selon la revendication 2, **caractérisé en ce que** la décomposition est réalisée à des températures de 35 à 65 °C, de préférence de 40 à 60 °C.

13. Procédé selon la revendication 1 à 12, **caractérisé en ce que** le résidu de décomposition est lavé au moins trois fois.

14. Procédé selon la revendication 1, **caractérisé en ce que** l'on utilise de l'acide sulfurique et/ou du peroxyde d'hydrogène en excédent.

15. Procédé selon la revendication 2, **caractérisé en ce que** l'on utilise de l'acide chlorhydrique et/ou du peroxyde d'hydrogène en excédent.

16. Procédé selon la revendication 14 ou 15, **caractérisé en ce que** l'on utilise un excédent de 0,1 à 10 % en mole.
